# EUROPÄISCHE PATENTSCHRIFT

(11) **EP 1 420 979 B1**
(45) Veröffentlichungstag und Bekanntmachung des Hinweises auf die Patenterteilung: **19.10.2005**
(21) Anmeldenummer: 02758446.5
(22) Anmeldetag: 08.08.2002
(51) Int. Cl.: B60N 2/427

(54) **ANORDNUNG EINER KOPFSTÜTZE AN EINEM FAHRZEUGSITZ, INSBESONDERE BEI EINEM HECKAUFFAHRUNFALL**
ARRANGEMENT OF A HEADREST ON A VEHICLE SEAT ESPECILALLY IN THE EVENT OF A REAR-END COLLISION
DISPOSITION D'UN APPUI-TETE SUR LE SIEGE D'UN VEHICULE, NOTAMMENT EN CAS D'ACCIDENT AVEC IMPACT ARRIERE

(30) Priorität: 01.09.2001 DE 10142926
(43) Veröffentlichungstag der Anmeldung: 26.05.2004
(73) Patentinhaber: DaimlerChrysler AG, 70567 Stuttgart (DE)
(72) Erfinder: EBERLE, Walter, 73269 Hochdorf (DE); REITINGER, Albert, 73663 Berglen (DE)
(86) Internationale Anmeldenummer: PCT/EP2002/008863
(87) Internationale Veröffentlichungsnummer: WO 2003/020548

(56) Entgegenhaltungen:
- EP-A- 0 952 033
- DE-A- 19 743 339
- DE-U- 29 609 786
- DE-U- 29 907 245
- GB-A- 2 301 906
- US-A- 5 927 804
- PATENT ABSTRACTS OF JAPAN vol. 1999, no. 05, 31. Mai 1999 (1999-05-31) -& JP 11 034708 A (IKEDA BUSSAN CO LTD), 9. Februar 1999 (1999-02-09)

## Beschreibung

Die vorliegende Erfindung betrifft eine Anordnung einer Kopfstütze an einem Fahrzeugsitz nach der im Oberbegriff des Patentanspruches 1 näher definierten Art (siehe z.B. DE 296 09 786 U1).

Untersuchungen haben ergeben, dass insbesondere bei Heckauffahrunfällen gehäuft ernsthafte Halswirbelsäulenverletzungen auftreten. Solche Halswirbelsäulenverletzungen erweisen sich insbesondere dahingehend als problematisch, dass der Heilungsprozess oft sehr langwierig ist und mit hohen Heilungskosten sowie entsprechenden Forderungen an Versicherungsgesellschaften verbunden ist.

Es ist daher ein großes Anliegen der Fahrzeugindustrie, Einrichtungen zum Schutz für Insassen in Fahrzeugen vorzusehen, die insbesondere bei Heckaufprallunfällen, bei denen schon ein Schleudertrauma selbst bei geringen Aufprallgeschwindigkeiten zwischen ca. 10 km/h und 40 km/h auftreten, Halswirbelsäulenverletzungen verringern oder sogar verhindern.

Nach Meinung medizinischer Experten treten Halswirbelsäulenverletzungen und das bekannte Schleudertrauma durch eine Relativbewegung des Kopfes zum Oberkörper auf, wenn der Kopf relativ gegenüber Oberkörper in Rückwärtsfahrtrichtung bewegt wird. Daneben sind auch Halswirbelsäulenverletzungen durch eine Überdrehung der Halsmuskulatur nach einem so genannten "Rebound" zu beklagen.

Aufgrund dieser Erkenntnisse zielen Einrichtungen zur Verringerung oder Vermeidung von Halswirbelsäulenverletzungen bei einem "Heckcrash" darauf ab, den Kopf und den Rücken eines Fahrzeuginsassen so abzustützen, dass im Crashfall keine Relativbewegung des Kopfes zum Oberkörper hin entsteht und eine Bewegung des Oberkörpers in Vorwärtsfahrtrichtung soweit wie möglich unterbunden wird.

Aus dem Stand der Technik sind bisher mehrere unterschiedliche Systeme bekannt, um Halswirbelsäulenverletzungen zu verringern oder gar zu vermeiden.

So wird beispielsweise in der DE 197 43 339 A1 eine Sitz- und Kopfstützenanordnung mit einem Sitzrückenlehnenrahmen mit einem oberen und einem unteren Teil offenbart. Das obere Teil des Sitzrückenlehnenrahmens weist dabei ein Querrahmenelement und das untere Teil zumindest einen unteren Abschnitt aus einem Paar beabstandeter Seitenelemente auf. Ferner weist diese Anordnung eine an dem Querrahmenelement angebrachte Kopfstütze, ein zwischen den Seitenelementen des unteren Teils positioniertes und am oberen Teil befestigtes Prallmittel und ein das obere und das untere Teil verbindendes und eine Drehachse definierendes Drehgelenk auf. Um diese Drehachse können das obere Teil und die Kopfstütze aus einer normalen Position nach vorne schwenken und so das Prallmittel aus einer normalen Position nach hinten schwenken. Weiterhin spannt ein Federmittel das obere Teil, die Kopfstütze und das Prallmittel in ihre normale Position vor.

Ist nun bei einer solchen Anordnung das Heck des Fahrzeuges einem Aufprall ausgesetzt, neigt der überwiegende Teil des Oberkörpers des Insassen dazu, sich relativ nach hinten zu bewegen, während die Schultern und der Kopf zu einer Bewegung in Vorwärtsfahrtrichtung neigen. Bei dieser bekannten Anordnung wirkt der Körper auf eine Prallplatte, die nach hinten ausschwenkt. Diese Schwenkbewegung führt dazu, dass sich das obere Teil des Sitzrückenlehnenrahmens und die Kopfstütze um die Drehachse herum nach vorne auf die Schultern bzw. den Kopf des Insassen hinzubewegen. Somit werden bei der Rückwärtsbewegung des Insassen der obere Teil des Sitzrückenlehnenrahmens und die Kopfstütze nach vorne bewegt, wodurch Halswirbelsäulenverletzungen bei einem Heckcrash entgegengewirkt wird.

Bei diesem durch die relative Rückwärtsbewegung des Insassen aktivierten System hat es sich als nachteilig erwiesen, dass die Auslösung des Systems allein vom Gewicht und der Position des Insassen abhängig ist. Aus diesem Grund ist es bei einem solchen System immer notwendig, dass es an den jeweiligen Insassen angepasst wird. Weiterhin ist bei dieser Lösung nachteilig, dass bei einem leichten Heckcrash der Bewegung des Insassen nicht ausreichend entgegengewirkt werden kann.

Darüber hinaus sind aus dem Stand der Technik auch so genannte aktive Systeme bekannt, wobei eine aktive Kopfstütze derart gestaltet sein kann, dass in der Kopfstütze ein Airbag enthalten ist. Die Aktivierung eines einen Airbag aufweisenden Systems kann je nach Sensoraufwand unter Berücksichtigung des Gewichts und der Position des Fahrzeuginsassen oder unabhängig davon erfolgen. Um ein Auslösen des Airbags auch bei kleineren Unfällen sicherzustellen, werden jedoch häufig niedrige Auslöseschwellen gesetzt, so dass stets eine vollständige Entfaltung des Airbags auch bei geringen Auffahrunfällen erfolgt.

Dies bedeutet, dass die aktiv durch den Airbag ausgelöste Vorwärtsbewegung des Insassen immer gleich groß ist, egal wie stark der Auffahrunfall tatsächlich ist. Es wird also nicht zwischen leichteren und schwereren Unfällen unterschieden, so dass unter Umständen durch das aktive System immer eine starke Vorwärtsbewegung des Kopfbereiches des Fahrzeugsitzes erreicht wird, was bei einem nur geringen Auffahrunfall zu Beeinträchtigungen des Insassen führen kann.

Aus der o.g. DE 296 09 786 U1 ist ein Fahrzeugsitz mit einer Rücklehne mit Kopfstütze bekannt, bei dem sich durch das Innere der Rückenlehne ein biegsames Zugelement erstreckt, das die Bewegung eines sich bei einem Heckaufprall verlagernden Massekörpers aufnimmt und eine Verschiebung einer kopfstützenseitigen Befestigung des Zugelementes hervorruft, die in einem mit dem Zugelement gekoppelten mechanischen Verstellmechanismus in eine Bewegung der Kopfstütze zum Kopf des Insassen umgesetzt wird. Das Zugelement kann dabei so gespannt sein, dass durch das Eindrücken des Insassen in die Rückenlehne bei einem Heckaufprall das Zugelement durchgebogen wird und so die Verschiebung der kopfstützenseitigen Befestigung des Zugelements hervorgerufen oder unterstützt wird.

Die aus der DE 296 09 786 U1 bekannte Lösung, bei der die Kopfstütze durch ein Spannen des Zugelements infolge der Trägheitskraft des Masseelementes aktiviert wird, erlaubt keine aktive Ansteuerung der Kopfstütze beispielsweise in einer unmittelbar dem eigentlichen Aufprall vorangehenden Pre-Crash-Phase. Wenn das Zugelement zudem von einem Fahrzeuginsassen durchgedrückt werden muss, ist die Sitzlehne nur mit einer geringen Polstersteifigkeit und somit einer reduzierten Lehnensteifigkeit realisierbar. Des Weiteren könnte bei dieser bekannten Lösung nachteilhafterweise die Verschwenkbarkeit der Kopfstütze insgesamt eingeschränkt sein.

Aus der US 5,927,804 ist ebenfalls eine Fahrzeuginsassenschutzeinrichtung bekannt, bei der die Kopfstütze relativ zum Rahmen des Sitzes bewegbar ist, wobei bei einem Heckaufprall die Betätigung der Kopfstütze allein durch die Trägheitskraft des Insassen erfolgt.

Ergänzend seien noch die GB 2 301 906 A, EP 0 952 033 A, JP 11 034708 A und die DE 299 07 245 U1 erwähnt, welche eine Ausgestaltung oder Anordnung einer Kopfstütze zur Verhinderung eines Halswirbel-Schleudertraumas bei einem Auffahrunfall betreffen.

Ausgehend von diesem Stand der Technik liegt der Erfindung die Aufgabe zugrunde, eine Anordnung einer Kopfstütze an einem Fahrzeugsitz zu schaffen, mit der die Verletzungen im Halswirbelsäulenbereich bei einem Heckcrash noch weiter verringert werden können, ohne den Insassen unnötig zu beeinträchtigen, indem die Kopfstütze der Unfallsituation angepasst und ausreichend in Vorwärtsfahrtrichtung verlagerbar ist, und mit der eine hohe Polster- und Lehnensteifigkeit realisierbar ist.

Diese Aufgabe wird durch eine Anordnung einer Kopfstütze gemäß Patentanspruch 1 gelöst.

Bei der Anordnung einer Kopfstütze an einem Fahrzeugsitz nach der Erfindung hat sich die Kombination der Bewegung der Kopfstütze bei einem Heckauffahrunfall in Vorwärtsfahrtrichtung durch eine Antriebseinrichtung und eine Unterstützung dieser Bewegung durch eine Übertragung einer Bewegung eines Oberkörpers eines sich auf dem Fahrzeugsitz befindlichen Insassen als sehr vorteilhaft erwiesen, da ein derart arbeitendes System, bei dem zuerst die Aktivierung durch die Antriebseinrichtung und die anschließende Unterstützung durch den Insassen erfolgt, sowohl bei leichten als auch bei schweren Heckauffahrunfällen eine rechtzeitige und ausreichende Verschiebung der Kopfstütze in Vorwärtsfahrtrichtung gewährleistet. Damit wird ein Halswirbelsäulenverletzungen entgegenwirkendes System bereitgestellt, das unabhängig von einem Gewicht und einer Position des Fahrzeuginsassen aktivierbar ist.

Die Anordnung nach der Erfindung bietet weiter den Vorteil, dass die Bewegung der Kopfstütze in Vorwärtsfahrtrichtung bei einem Heckcrash nicht über einen vorgegebenen, maximalen Verschiebeweg erfolgt, sondern durch die Relativbewegung des Oberkörpers des Insassen unterstützt und somit dosiert erfolgt, wobei die Bewegung des Insassen bei einem nur geringen Heckaufprall entsprechend geringer ist und der Verschiebeweg der Kopfstütze entsprechend kürzer ist als bei einem schwereren Heckaufprall.

Weiterhin zeichnet sich die Anordnung nach der Erfindung dadurch aus, dass eine komplexe Anpassung an eine Lehnen- und Polsterstruktur sowie Steifigkeit des Fahrzeugsitzes entfällt und ein Zielkonflikt zwischen Komfort- und Sicherheitsauslegung des Fahrzeugsitzes und der Kopfstütze vermieden wird.

Weitere Vorteile und vorteilhafte Ausgestaltungen der Erfindung ergeben sich aus der Beschreibung, den Patentansprüchen und der Zeichnung.

Ein Ausführungsbeispiel einer erfindungsgemäßen Anordnung einer Kopfstütze an einem Fahrzeugsitz eines Kraftfahrzeuges ist in der Zeichnung schematisch vereinfacht dargestellt und wird in der nachfolgenden Beschreibung näher erläutert.

Es zeigt hierbei:
- Fig. 1: eine vereinfachte Vorderansicht einer erfindungsgemäßen Anordnung einer Kopfstütze an einem Fahrzeugsitz in Normallage;
- Fig. 2: eine Seitenansicht der Anordnung einer Kopfstütze an einem Fahrzeugsitz gemäß Fig. 1 ohne Polsterelemente;
- Fig. 3: eine Vorderansicht der Anordnung einer Kopfstütze an einem Fahrzeugsitz nach Fig. 1 und Fig. 2 während einer Bewegung der Kopfstütze in Vorwärtsfahrtrichtung infolge eines Heckauffahrunfalles;
- Fig. 4: eine Seitenansicht der Anordnung nach Fig. 3 ohne Polsterelemente;
- Fig. 5: eine dreidimensionale Vorderansicht einer Anordnung einer Kopfstütze an einem Fahrzeugsitz mit einer bezüglich der Ausführung nach Fig. 1 bis Fig. 4 alternativen Antriebseinrichtung; und
- Fig. 6: eine dreidimensionale Rückansicht der Anordnung nach Fig. 5.

Bezug nehmend auf die Figuren der Zeichnung ist ausschnittsweise und stark vereinfacht ein oberer Bereich eines Fahrzeugsitzes 1 eines Kraftfahrzeuges dargestellt, wobei eine nur schematisch angedeutete Rückenlehne 2 mit einer Kopfstütze 3 verbunden ist.

Die Anordnung der Kopfstütze 3 an dem Fahrzeugsitz 1 ist in der Art vorgesehen, daß die Kopfstütze 3 bei einem Heckauffahrunfall in Vorwärtsfahrtrichtung durch eine Antriebseinrichtung 4 und eine Pralleinrichtung 5, welche die Bewegung eines Oberkörpers eines auf dem Fahrzeugsitz 1 befindlichen Insassen aufnimmt, bewegt wird.

Zur Aufnahme der Kopfstütze 3 ist ein Rahmen 6 vorgesehen, welcher mit zwei säulenartigen Rohren 7, 8 in die Polsterung der Kopfstütze 3 ragt. Die Säulen 7, 8 können in herkömmlicher Weise vertikal einstellbar sein, so daß die Höhe der Kopfstütze 3 an die Kopfhöhe des Fahrzeuginsassen anpaßbar ist.

In seinem der Rückenlehne 2 zugewandten Bereich bildet der Rahmen 6 ein annähernd U-förmiges Profil mit zwei Schenkeln, von denen jeder mit einem Spindeltrieb 9 verbunden ist.

Jeder Spindeltrieb 9 weist eine Spindel 10 auf, welche durch einen hier als Elektromotor ausgebildeten Motor 11 und ein Untersetzungsgetriebe 19 antreibbar ist.

Hiervon abweichend kann auch ein Antrieb durch nur einen Motor vorgesehen sein, welcher auf einen Spindeltrieb und über eine Verbindungswelle auch auf den zweiten Spindeltrieb wirkt. Bei einer solchen Ausführung, bei dem nur ein Motor, welcher elektrisch, pneumatisch oder hydraulisch angetrieben werden kann, benötigt wird, ist eine größere Toleranz hinsichtlich des exakten Gleichlaufs der Antriebe der Spindeltriebe zulässig.

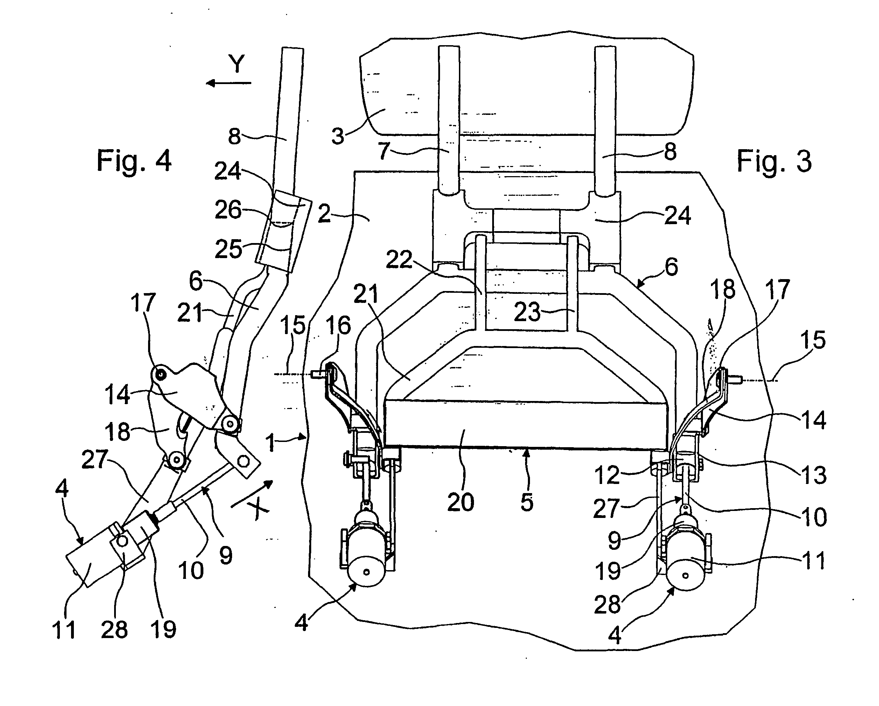

Bei Betätigung des Spindeltriebes 9 wird eine auf der Spindel 10 drehbare Aufnahme bzw. Spindelmutter 12, welche über zwei Spindelmutterhalter 13 mit dem Rahmen 6 verbunden ist, axial auf der Spindel 10 bewegt. So wird die Spindel 10 bei einem Heckauffahrunfall von dem Elektromotor 11 derart angetrieben, daß sich die Spindelmutter von dem Elektromotor 11 in einer in Fig. 4 mit einem Pfeil X bezeichneten Bewegungsrichtung entfernt. Die Spindel 10 weist dabei vorteilhafterweise eine Selbstsperreinrichtung auf.

Der Rahmen 6 ist über eine Schwinge 14 um eine sitzlehnenfeste Drehachse 15 schwenkbar, wobei die Schwenkachse 15 vorliegend durch zwei symmetrisch zueinander angeordnete Drehpunkte 16, 17 verläuft, die vorliegend wiederum durch eine Schraubbefestigung an einer nicht näher dargestellten Lehnenstruktur gebildet werden. Durch die Schraubbefestigungen 16, 17 ist des weiteren die Pralleinrichtung 5 über eine weitere Schwinge 18 an der Sitzlehnenstruktur schwenkbar angebunden.

Die Pralleinrichtung 5 weist eine Prallplatte 20 auf, welche sich zwischen den U-Schenkeln des Rahmens 6 in einer im wesentlichen parallel zur Rückenlehne 2 verlaufenden Ebene in Höhe des Oberkörpers eines Fahrzeuginsassen erstreckt. Die Prallplatte 20 ist vorliegend auf einem Rahmen 21 befestigt, welcher eine ähnliche Geometrie wie der Rahmen 6 zur Aufnahme der Kopfstütze 3 aufweist, wobei er innerhalb des U-Profils des Rahmens 6 ein annähernd U-förmiges Profil bildet und entgegen der Kopfstütze 3 zwei Führungsstangen 22, 23 aufweist, welche in einer sitzlehnenfesten Führung 24 geführt sind.

Diese sitzlehnenfeste Führung 24 stellt gleichzeitig eine Führungshülse für die Säulen 7, 8 des Rahmens 6 dar, wobei der jeweilige Durchtritt 25 der Säule 7 bzw. 8 durch die Führungshülse 24 mit einem kinematischen Schwenkpunkt 26 ausgebildet ist, welcher ein Verschwenken des Rahmens 6 um die Drehachse 15 erlaubt.

In Verlängerung der U-Schenkel des Rahmens 21 der Pralleinrichtung 5 ist an diesen jeweils ein strebenartiger Halter 27 befestigt, welche wiederum mit einer Halterung 28 für den Elektromotor 11 der Antriebseinrichtung 4 fest verbunden ist. Auf diese Weise wird eine feste Verbindung zwischen der Pralleinrichtung 5 und der Antriebseinrichtung 4 geschaffen.

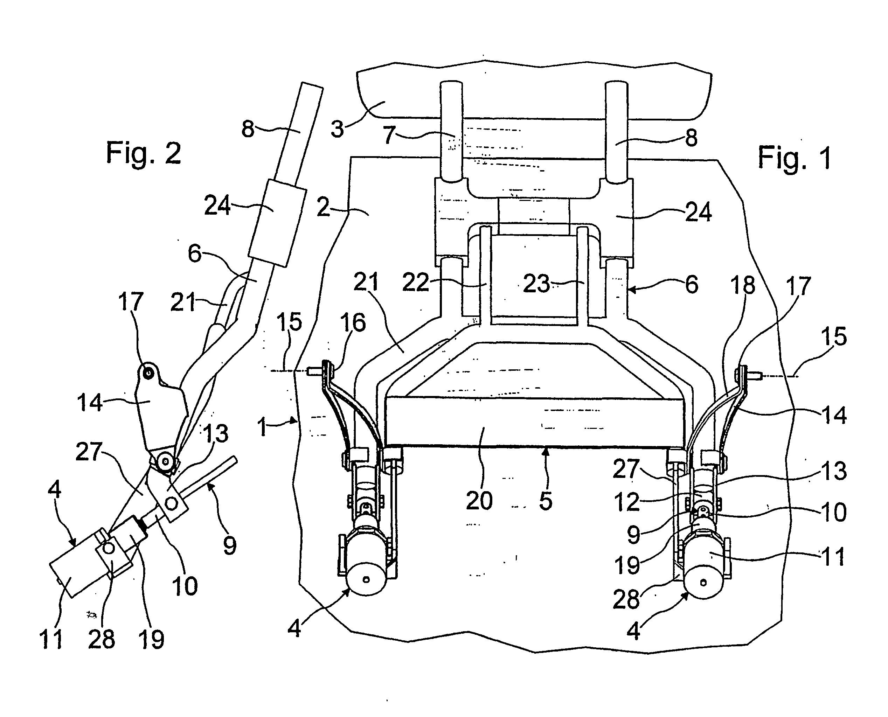

Betrachtet man die Funktionsweise der vorliegenden Anordnung, so wird die Kopfstütze 3 ausgehend von der in Fig. 1 und Fig. 2 gezeigten Normallage bei einem Heckauffahrunfall derart betätigt, daß sie sich in Vorwärtsfahrtrichtung Y bewegt, wie dies in den Fig. 3 und Fig. 4 dargestellt ist.

Bei einem Heckauffahrunfall, welcher durch eine an sich bekannte Sensorik detektiert werden kann, wird über eine geeignete Steuerung, welche beispielsweise eine bereits im Fahrzeug vorhandene Steuerung sein kann, die Antriebseinrichtung 4 aktiviert, indem deren Elektromotor 11 den Spindeltrieb 9 antreibt, wobei die Spindelmutter 12 axial auf dieser in Einbaulage nach hinten bewegt wird. Der Rahmen 6 zur Aufnahme der Kopfstütze 3 wird dabei mit der Schwinge 14 um die Drehachse 15 und den kinematischen Schwenkpunkt 26 in der Führungshülse 24 geschwenkt, so daß die Kopfstütze 3 in Vorwärtsfahrtrichtung Y verschoben wird.

Die Verschiebung der Kopfstütze 3 erfolgt dabei unabhängig vom Gewicht des zu schützenden Insassen, dessen Kopf bei einem Heckauffahrunfall relativ nach hinten bewegt wird.

Je nach Verstellweg auf der Spindel 10 und Schwenkwinkel um die Drehachse 15 kann es vorgesehen sein, daß die Verschiebung der Kopfstütze 3 durch die Antriebseinrichtung 4 unabhängig von der Unfallschwere erfolgt, so daß auch bei einem sehr leichten Unfall stets eine erforderliche Auslenkung der Kopfstütze 3 sichergestellt ist. Die Ansteuerung der Antriebseinrichtung 4 kann jedoch auch in Abhängigkeit bestimmter Parameter, wie z.B. einer Insassenposition oder einer Fahrzeugverzögerung oder weiterer, die Unfallschwere definierende Parameter erfolgen, so daß die Verschiebung der Kopfstütze 3 gleichsam dosiert erfolgt.

Bei einem Heckauffahrunfall wird stets auch der Oberkörper eines Fahrzeuginsassen nach hinten bewegt, wobei diese Bewegung jedoch relativ zur Bewegung des Kopfes erfolgt. Bei der vorliegenden Anordnung wird die Rückwärtsbewegung des Oberkörpers zur Unterstützung der Vorwärtsbewegung der Kopfstütze 3 genützt.

Wenn der Insasse bei einem Heckauffahrunfall mit seinem Oberkörper nach hinten in den Fahrzeugsitz 1 geschoben wird, drückt er die in der Sitzrückenlehne 2 angeordnete Prallplatte 20 der Pralleinrichtung 5 nach hinten weg, wobei die Prallplatte 20 und der Rahmen 21 ebenfalls um die Drehachse 15 geschwenkt werden. Da die mit dem Rahmen 6 zur Aufnahme der Kopfstütze 3 verbundene Antriebseinrichtung 4 über die Motorhalterung 27 mit der Pralleinrichtung 5 verbunden ist, wird die Antriebseinrichtung 4 zusammen mit der Pralleinrichtung 5 um einen weiteren Drehwinkel um die sitzlehnenfeste Drehachse 15 verschwenkt, was eine weitere Verschiebung der Kopfstütze 3 in Vorwärtsfahrtrichtung Y zur Folge hat.

Der Beginn der Bewegung der Pralleinrichtung 5 ist in den Fig. 3 und Fig. 4 dargestellt.

Durch dieses kombinierte System, bei dem zuerst eine Aktivierung der Kopfstützenvorwärtsbewegung durch die Antriebseinrichtung 4 erfolgt, welche anschließend durch die Bewegung des Insassen mittels der Pralleinrichtung 5 unterstützt wird, kann die Aktivierung der Kopfstütze 3 so eingestellt werden, daß bereits bei leichten Personen und leichteren Heckunfällen, wie z.B. bei einer Differenzgeschwindigkeit von bis zu 10 km/h, eine durch die Antriebseinrichtung 4 erzeugte rechtzeitige und ausreichende Auslenkung der Kopfstütze 3 zur Anlage des Kopfes des sich auf dem Fahrzeugsitz 1 befindlichen Insassen erfolgt, während aber auch bei einem sehr schweren Heckcrash eine ausreichende Verschiebung der Kopfstütze 3 mit Unterstützung der Pralleinrichtung 5 erfolgen kann.

Die vorzugsweise vor der Betätigung der Pralleinrichtung 5 erfolgende Betätigung der Antriebseinrichtung 4 sollte so frühzeitig erfolgen, daß das Problem eines "Anschießens" und eines Knalls am Ohr durch die Kopfstütze, wie es bei Airbags bekannt ist, durch eine entsprechend langsamere Bewegung der Kopfstütze 3 vermieden wird.

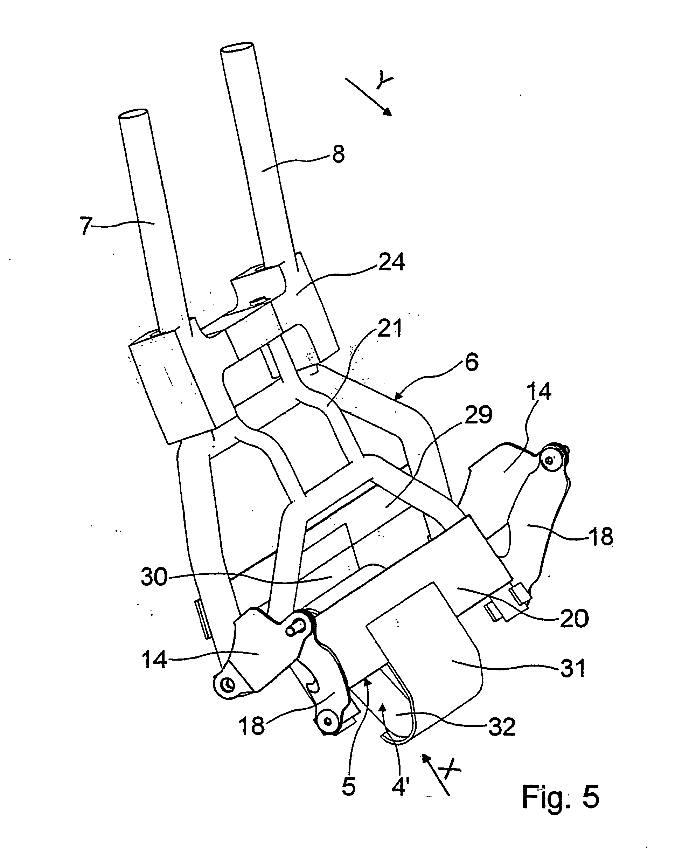

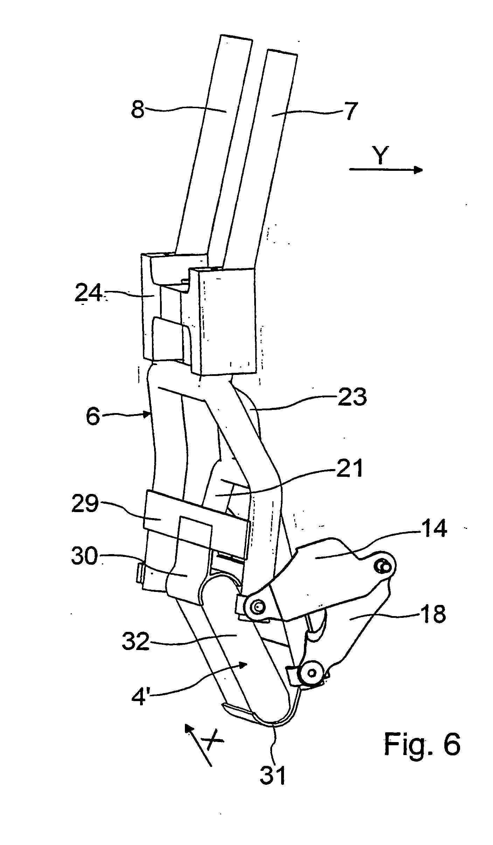

Die Fig. 5 und Fig. 6 zeigen eine im wesentlichen der Anordnung gemäß den Fig. 1 bis Fig. 4 entsprechende Anordnung einer Kopfstütze an einem Fahrzeugsitz, weshalb hier für funktionsgleiche Bauelemente die gleichen Bezugszeichen verwendet werden.

Im Unterschied zu der Ausführung nach den Fig. 1 bis Fig. 4 dient hier als Antriebseinrichtung ein pneumatischer Antrieb 4', welcher einen entfaltbaren Luftsack 32 aufweist. Der Luftsack 32 ist über eine erste Halterung, bestehend aus einer Befestigungsplatte 29 an dem Rahmen 6 und einem direkt an den Luftsack 32 anliegenden, mit der Platte 29 fest verbundenen Halter 30 mit dem Rahmen 6 zur Aufnahme der Kopfstütze verbunden. Am anderen Ende des Luftsackes 32 ist dieser mit einer zweiten Halterung, welche im wesentlichen aus einem U-förmigen Halter 31 besteht, mit der Prallplatte 20 der Pralleinrichtung 5 verbunden.

Zur Aktivierung des pneumatischen Antriebs 4' wird der Luftsack 32 mit Luft befüllt, wobei der Luftsack hierzu mit einer allgemeinen, bereits vorhandenen Luftversorgung im Fahrzeug verbunden sein kann. Um ein noch schnelleres Öffnen des Luftsacks 32 zu ermöglichen, kann dieser auch über einen Druckspeicher mit Zünder nach der bei Airbags bekannten Art und Weise angetrieben werden.

Bezüglich seiner Funktionsweise arbeitet der pneumatische Antrieb 4' wie die zuvor beschriebene Antriebseinrichtung 4 mit dem Spindeltrieb 9, wobei sich die Ausführung nach Fig. 5 und Fig. 6 durch eine kompakte Bauweise und einen einfachen Aufbau auszeichnen.

Besonders vorteilhaft ist bei allen vorliegenden Ausführungen, daß sie reversibel sind und somit nach einer Aktivierung wieder verwendet werden können. Bei einer solchen reversiblen Ausgestaltung können die Vorgaben an die Auslösesicherheit der Steuerelektronik entsprechend geringer gehalten werden, da eine eventuelle Fehlauslösung keinen kompletten Austausch des Systems erfordert.

Es versteht sich, daß die erfindungsgemäße Anordnung nicht auf die hier gezeigten konstruktiven Ausführungen begrenzt ist, da diese zahlreiche Ausführungsvarianten haben können. So kann beispielsweise die Pralleinrichtung statt der beschriebenen Prallplatte ein Prallband aufweisen, das mit einer entsprechend adaptierten Halterung in die erfindungsgemäße Anordnung integriert ist.

Die Antriebseinrichtung kann in weiteren Ausführungen anstelle des Spindeltriebs und des pneumatischen Antriebs mit einem Luftsack auch sonstige aufblasbare Polsterelemente oder eine selbstsperrende Pneumatik mit Zylinder oder einen Hydraulikzylinder aufweisen, wie sie dem Fachmann aus dem Stand der Technik schon seit längerer Zeit bekannt sind.

## Patentansprüche

1. Anordnung einer Kopfstütze (3) an einem Fahrzeugsitz (1) eines Kraftfahrzeuges, wobei die Kopfstütze (3) bei einem Heckauffahrunfall in Vorwärtsfahrtrichtung (Y) wenigstens durch eine eine Rückwärtsbewegung eines Oberkörpers eines auf dem Fahrzeugsitz (1) befindlichen Insassen aufnehmende Pralleinrichtung (5) bewegbar ist,
**dadurch gekennzeichnet,**
**dass** ein Rahmen (6) zur Aufnahme der Kopfstütze (3) und die Pralleinrichtung (5) schwenkbar an dem Fahrzeugsitz (1) gelagert und miteinander verbunden sind, wobei der Rahmen (6) bei Aktivierung einer Antriebseinrichtung (4, 4') in Vorwärtsfahrtrichtung (Y) und bei Verschwenkung der Pralleinrichtung (5) um einen weiteren Drehwinkel in Vorwärtsfahrtrichtung (Y) schwenkbar ist.

2. Anordnung einer Kopfstütze an einem Fahrzeugsitz nach Anspruch 1,
**dadurch gekennzeichnet,**
**dass** der Rahmen (6), die Antriebseinrichtung (4, 4') und die Pralleinrichtung (5) derart zueinander angeordnet sind, dass die Bewegung der Kopfstütze (3) in Vorwärtsfahrtrichtung (Y) durch die Antriebseinrichtung (4, 4') zeitlich vor einer Betätigung der Pralleinrichtung (5) infolge einer Rückwärtsbewegung des Oberkörpers des Fahrzeuginsassen erfolgt.

3. Anordnung einer Kopfstütze an einem Fahrzeugsitz nach Anspruch 1 oder 2,
**dadurch gekennzeichnet,**
**dass** der Rahmen (6) und die Pralleinrichtung (5) um eine gemeinsame sitzlehnenfeste Drehachse (15) schwenkbar sind.

4. Anordnung einer Kopfstütze an einem Fahrzeugsitz nach einem der Ansprüche 1 bis 3,
**dadurch gekennzeichnet,**
**dass** der Rahmen (6) in einer sitzlehnenfesten Führung (24) geführt ist.

5. Anordnung einer Kopfstütze an einem Fahrzeugsitz nach einem der Ansprüche 1 bis 4,
**dadurch gekennzeichnet,**
**dass** die Pralleinrichtung (5) mit der Antriebseinrichtung (4) drehverbunden ist.

6. Anordnung einer Kopfstütze an einem Fahrzeugsitz nach einem der Ansprüche 1 bis 5,
**dadurch gekennzeichnet,**
**dass** die Pralleinrichtung (5) eine zur Aufnahme einer Bewegung des Oberkörpers eines Insassen vorgesehene Prallplatte (20) oder ein Prallband aufweist.

7. Anordnung einer Kopfstütze an einem Fahrzeugsitz nach einem der Ansprüche 1 bis 6,
**dadurch gekennzeichnet,**
**dass** die Pralleinrichtung (5) an einer sitzlehnenfesten Führung (24) geführt ist, wobei der Rahmen (6) zur Aufnahme der Kopfstütze (3) und die Pralleinrichtung (5) vorzugsweise an einer gemeinsamen sitzlehnenfesten Führung (24) geführt sind.

8. Anordnung einer Kopfstütze an einem Fahrzeugsitz nach einem der Ansprüche 1 bis 7,
**dadurch gekennzeichnet,**
**dass** die Antriebseinrichtung (4) wenigstens einen Spindeltrieb (9) aufweist.

9. Anordnung einer Kopfstütze an einem Fahrzeugsitz nach Anspruch 8,
**dadurch gekennzeichnet,**
**dass** der Spindeltrieb (9) eine Spindel (10) aufweist, welche durch einen Motor (11) derart antreibbar ist, dass eine mit dem Rahmen (6) zur Aufnahme der Kopfstütze (3) verbundene drehbare Aufnahme (12) für die Spindel (10) auf dieser axial bewegt wird.

10. Anordnung einer Kopfstütze an einem Fahrzeugsitz nach Anspruch 9,
**dadurch gekennzeichnet,**
**dass** die Spindel (10) eine Selbstsperreinrichtung aufweist.

11. Anordnung einer Kopfstütze an einem Fahrzeugsitz nach Anspruch 3 bzw. nach einem der Ansprüche 4 bis 10 in Zusammenhang mit Anspruch 3,
**dadurch gekennzeichnet,**
**dass** die Drehachse (15) durch zwei symmetrisch zueinander angeordnete sitzlehnenfeste Drehpunkte (16, 17) verläuft, um die jeweils ein Spindeltrieb (9) schwenkbar ist.

12. Anordnung einer Kopfstütze an einem Fahrzeugsitz nach einem der Ansprüche 1 bis 11,
**dadurch gekennzeichnet,**
**dass** die Antriebseinrichtung (4') wenigstens einen Elektromotor (11) und/oder einen Pneumatikantrieb und/oder einen Hydraulikantrieb aufweist.

13. Anordnung einer Kopfstütze an einem Fahrzeugsitz nach einem der Ansprüche 1 bis 12,
**dadurch gekennzeichnet,**
**dass** die Anordnung reversibel ausgestaltet ist.

## Claims

1. Arrangement of a headrest (3) on a seat (1) of a motor vehicle, wherein the headrest (3) is, at a rear-end impact, movable in the forward travelling direction (Y) at least by means of an impact absorber (5) absorbing the rearward movement of the upper part of the body of a vehicle occupant sitting on the vehicle seat (1),
**characterised in that**
a frame (6) for the location of the headrest (3) on the one hand and the impact absorber (5) on the other hand are pivotably mounted on the vehicle seat (1) and joined to one another, the frame (6) being capable of swivelling in the forward travel direction (Y) if a drive unit (4, 4') is activated and by a further rotational angle in the forward travelling direction (Y) if the impact absorber (5) is pivoted.

2. Arrangement of a headrest on a vehicle seat according to claim 1,
**characterised in that**
the frame (6), the drive unit (4, 4') and the impact absorber (5) are so arranged relative to one another that the movement of the headrest (3) in the forward travelling direction (Y) initiated by the drive unit (4, 4') precedes the operation of the impact absorber (5) as a result of a rearward movement of the upper part of the body of the vehicle occupant.

3. Arrangement of a headrest on a vehicle seat according to claim 1 or 2,
**characterised in that**
the frame (6) and the impact absorber (5) are pivoted about a common axis of rotation (15) located on the seat back.

4. Arrangement of a headrest on a vehicle seat according to any of claims 1 to 3,
**characterised in that**
the frame (6) is guided in a guide (24) located on the seat back.

5. Arrangement of a headrest on a vehicle seat according to any of claims 1 to 4,
**characterised in that**
the impact absorber (5) is rotationally joined to the drive unit (4).

6. Arrangement of a headrest on a vehicle seat according to any of claims 1 to 5,
**characterised in that**
the impact absorber (5) is fitted with an impact plate (20) or strip to absorb a movement of the upper part of the body of a vehicle occupant.

7. Arrangement of a headrest on a vehicle seat according to any of claims 1 to 6,
**characterised in that**
the impact absorber (5) is guided on a guide (24) located on the seat back, the frame (6) for the location of the headrest (3) and the impact absorber (5) being preferably guided along a common guide (24) located on the seat back.

8. Arrangement of a headrest on a vehicle seat according to any of claims 1 to 7,
**characterised in that**
the drive unit (4) incorporates at least one spindle drive (9).

9. Arrangement of a headrest on a vehicle seat according to claim 8,
**characterised in that**
the spindle drive (9) incorporates a spindle (10) so driven by a motor (11) that a rotatable location (12) for the spindle (10), which is connected to the frame (6) for locating the headrest (3), is moved axially on the spindle.

10. Arrangement of a headrest on a vehicle seat according to claim 9,
**characterised in that**
the spindle (10) incorporates a self-locking mechanism.

11. Arrangement of a headrest on a vehicle seat according to claim 3 or according to any of claims 4 to 10 in conjunction with claim 3,
**characterised in that**
the axis of rotation (15) runs through two pivots (16, 17) located symmetrically on the seat back, about each of which a spindle drive (9) is pivoted.

12. Arrangement of a headrest on a vehicle seat according to any of claims 1 to 11,
**characterised in that**
the drive unit (4') comprises at least one electric motor (11) and/or a pneumatic drive and/or a hydraulic drive.

13. Arrangement of a headrest on a vehicle seat according to any of claims 1 to 12,
**characterised in that**
the arrangement is designed to be reversible.

## Revendications

1. Agencement d'un repose-tête (3) sur un siège (1) d'un véhicule automobile, le repose-tête (3) étant apte à être déplacé dans la direction de marche avant (Y), en cas d'accident avec choc arrière, au moins par un dispositif d'absorption de chocs (5) absorbant un mouvement en arrière du buste d'un passager assis sur le siège (1), **caractérisé en ce qu'**un châssis (6), destiné à recevoir le repose-tête (3), et le dispositif d'absorption de chocs (5) sont montés pivotants sur le siège (1) et sont assemblés l'un à l'autre, le châssis (6) étant apte à pivoter dans la direction de marche avant (Y) en cas d'actionnement d'un dispositif d'entraînement (4, 4') et sur un angle de rotation supplémentaire dans la direction de marche avant (Y) en cas de pivotement du dispositif d'absorption de chocs (5).

2. Agencement d'un repose-tête sur un siège de véhicule selon la revendication 1, **caractérisé en ce que** le châssis (6), le dispositif d'entraînement (4, 4') et le dispositif d'absorption de chocs (5) sont agencés les uns par rapport aux autres de telle sorte que le mouvement du repose-tête (3) dans la direction de marche avant (Y) est généré, sous l'effet d'un mouvement en arrière du buste du passager, par le dispositif d'entraînement (4, 4') à un moment précédant un actionnement du dispositif d'absorption de chocs (5).

3. Agencement d'un repose-tête sur un siège de véhicule selon la revendication 1 ou 2, **caractérisé en ce que** le châssis (6) et le dispositif d'absorption de chocs (5) sont aptes à pivoter autour d'un axe de rotation (15) commun, solidaire du dossier.

4. Agencement d'un repose-tête sur un siège de véhicule selon l'une quelconque des revendications 1 à 3, **caractérisé en ce que** le châssis (6) est guidé dans un guidage (24) solidaire du dossier.

5. Agencement d'un repose-tête sur un siège de véhicule selon l'une quelconque des revendications 1 à 4, **caractérisé en ce que** le dispositif d'absorption de chocs (5) est relié en rotation avec le dispositif d'entraînement (4).

6. Agencement d'un repose-tête sur un siège de véhicule selon l'une quelconque des revendications 1 à 5, **caractérisé en ce que** le dispositif d'absorption de chocs (5) comporte une plaque d'absorption de chocs (20) ou une sangle d'absorption de chocs.

7. Agencement d'un repose-tête sur un siège de véhicule selon l'une quelconque des revendications 1 à 6, **caractérisé en ce que** le dispositif d'absorption de chocs (5) est guidé sur un guidage (24) solidaire du dossier, le châssis (6), destiné à recevoir le repose-tête (3), et le dispositif d'absorption de chocs (5) étant guidés de préférence sur un guidage (24) commun, solidaire du dossier.

8. Agencement d'un repose-tête sur un siège de véhicule selon l'une quelconque des revendications 1 à 7, **caractérisé en ce que** le dispositif d'entraînement (4) comporte au moins un entraînement à broche (9).

9. Agencement d'un repose-tête sur un siège de véhicule selon la revendication 8, **caractérisé en ce que** l'entraînement à broche (9) comporte une broche (10) qui peut être actionnée par un moteur (11) de manière à déplacer dans le sens axial sur la broche (10) un élément de réception (12) pour la broche (10), lequel est assemblé de manière rotative avec le châssis (6) recevant le repose-tête (3).

10. Agencement d'un repose-tête sur un siège de véhicule selon la revendication 9, **caractérisé en ce que** la broche (10) comporte un dispositif d'auto-verrouillage.

11. Agencement d'un repose-tête sur un siège de véhicule selon la revendication 3 ou selon l'une quelconque des revendications 4 à 10 en corrélation avec la revendication 3, **caractérisé en ce que** l'axe de rotation (15) passe par deux points de rotation (16, 17) solidaires du dossier et symétriques l'un à l'autre, autour desquels peut pivoter respectivement un entraînement à broche (9).

12. Agencement d'un repose-tête sur un siège de véhicule selon l'une quelconque des revendications 1 à 11, **caractérisé en ce que** le dispositif d'entraînement (4') comporte au moins un moteur électrique (11) et/ou un entraînement pneumatique et/ou un entraînement hydraulique.

13. Agencement d'un repose-tête sur un siège de véhicule selon l'une quelconque des revendications 1 à 12, **caractérisé en ce que** l'agencement est conçu de manière réversible.
